Europäisches Patentamt

(19) European Patent Office

Office européen des brevets

(11) Numéro de publication: **0 176 415**

**B1**

(12) **FASCICULE DE BREVET EUROPÉEN**

(45) Date de publication du fascicule du brevet:
31.05.89

(51) Int. Cl.⁴: **G 10 K 11/30**, G 01 H 3/12

(21) Numéro de dépôt: **85401727.4**

(22) Date de dépôt: **05.09.85**

(54) Microscope acoustique pour analyser un objet en profondeur comportant des lentilles asphériques.

(30) Priorité: **12.09.84 FR 8413988**

(43) Date de publication de la demande:
**02.04.86 Bulletin 86/14**

(45) Mention de la délivrance du brevet:
**31.05.89 Bulletin 89/22**

(84) Etats contractants désignés:
**AT BE CH DE FR GB IT LI LU NL SE**

(56) Documents cité:
**US-A-4 012 950**

**APPLIED PHYSICS LETTERS, vol. 24, no. 4, 15 févier 1974, pages 163-165, American Institute of Physics, New York, US; R.A. LEMONS et al.: "Acoustic microscope-scanning version"**
**APPLIED PHYSICS LETTERS, vol. 35, no. 5, 1 septembre 1979, pages 385-387, American Institute of Physics, New York, US; V.B. JIPSON: "Acoustic microscopy of interior planes"·**
**TLE, no. 492, mars 1984, pages 56-58, Paris, FR; J. ATTAL et al.: "Progrès de la microscopie acoustique dans l'investigation des solides"**

(73) Titulaire: **CENTRE NATIONAL DE LA RECHERCHE SCIENTIFIQUE (CNRS), 15, Quai Anatole France, F-75700 Paris Cedex 07 (FR)**

(72) Inventeur: **Attal, Jacques, C3 Le Parc des Roses 23, Avenue Saint Lazare, F-34000 Montpellier (FR)**
Inventeur: **Cambon, Gaston, 233, rue du Champ de la Blanche, F-34270 Saint Gely Du Fex (FR)**

(74) Mandataire: **Mongrédien, André, c/o BREVATOME 25, rue de Ponthieu, F-75008 Paris (FR)**

## Description

La présente invention a pour objet un microscope acoustique permettant d'analyser un objet en profondeur, comportant des lentilles asphériques.

Ce microscope permet d'observer sans dommage et en profondeur des structures de matériaux et notamment des structures de circuits intégrés en microélectronique et de cellules biologiques. Dans le cas de la microélectronique, le microscope acoustique permet, sans destruction, de tester des composants électroniques, réalisés par exemple sur une même pastille de silicium, à tous les stades de leur élaboration; il permet notamment de localiser les défauts de ces composants, dans des plans parallèles à la surface de la plaquette et ce, aussi bien à la surface qu'à l'intérieur de ces composants. De même, compte tenu du caractère non destructif du microscope acoustique, il est possible d'observer, sans coloration, un prélèvement de tissu et d'apporter ainsi un diagnostic rapide quant à l'état de ce tissu.

Le microscope acoustique peut aussi être utilisé en micrométallurgie pour observer avec précision l'orientation relative des cristaux et déterminer leur limite sans effectuer au préalable de polissage ou d'attaque chimique ainsi que pour analyser les défauts (microfailles, cassures) à l'intérieur de ces cristaux.

Le principe de fonctionnement des microscopes acoustiques s'inspire beaucoup de celui des microscopes optiques. Ce principe a notamment été décrit dans un article de Applied Physic Letters vol. 24, n° 4, 15 février 1974 de R. A. LEMONS et C.F. QUATE.

Les microscopes acoustiques connus sont constitués, entre autres, d'une lentille de focalisation et d'une lentille objectif de forme cylindrique, usinées chacune à l'une des extrémités d'un milieu de propagation acoustique, présentant la forme d'un barreau réalisé généralement en saphir. Les deux barreaux sont situés dans le prolongement l'un de l'autre. Par ailleurs, les points focaux des deux lentilles sont confondus. Une goutte de liquide tel que de l'eau, permet de relier les deux lentilles.

A l'autre extrémité des barreaux est accolé un transducteur piézoélectrique. L'un des transducteurs permet d'engendrer des ondes ultrasonores à l'intérieur de la goutte de liquide, dans laquelle est immergé l'objet à analyser, et l'autre transducteur de détecter les ondes ultrasonores transmises par l'objet. Un dispositif mécanique permet de déplacer l'objet dans le plan focal des deux lentilles, ce plan focal correspondant au plan d'observation de l'objet.

Les microscopes décrits ci-dessus sont des microscopes fonctionnant en transmission. Mais on connaît aussi des microscopes fonctionnant en réflexion; ces derniers comprennent une seule lentille jouant soit le rôle de lentille de focalisation, soit le rôle de lentille objectif et un seul transducteur ultrasonore jouant soit le rôle d'émetteur, soit le rôle de récepteur.

Ces différents microscopes permettent de donner des images d'objets avec une définition meilleure que le micron et une résolution comparable à celle des meilleurs microscopes optiques.

Ces microscopes, qui permettent de faire une excellente analyse des objets en surface, permettent très difficilement de faire une observation en profondeur de ces mêmes objets, ce qui limite considérablement leur utilisation.

Cette difficulté d'analyse en profondeur est principalement liée à l'emploi de lentilles sphériques. En effet, dans le ou les barreaux et la goutte de liquide, on a deux types d'ondes ultrasonores qui se propagent: des ondes longitudinales et des ondes transversales. Ces deux types d'ondes; qui se propagent à des vitesses différentes, la vitesse des ondes longitudinales étant supérieure à celle des ondes transversales, donnent naissance, du fait même de la forme sphérique des lentilles, à deux foyers paraxiaux nettement différents, l'un correspondant aux ondes longitudinales et l'autre aux ondes transversales. L'existence de ces deux foyers gêne considérablement l'analyse microscopique en profondeur d'un objet.

En plus de la forme des lentilles, l'analyse en profondeur des objets est difficilement réalisable compte tend de la nature du liquide utilisée, généralement l'eau, qui présente une impédance acoustique 10 a 60 fois plus faible que celle des matériaux solides constituant les objets à analyser, ce qui entraîne une perte d'énergie ultrasonore de l'ordre de 80 à 95 % rendant l'observation en profondeur très difficile.

L'invention a justement pour objet un microscope acoustique permettant de remédier aux inconvénients cités ci-dessus et permettant notamment d'analyser des objets en profondeur.

De façon plus précise, l'invention a pour objet un microscope acoustique du genre de ceux qui comprennent deux barreaux identiques disposés dans le prolongement l'un de l'autre et comportant à leurs extrémités situées en regard une cavité, ces cavités définissant au moins une lentille de focalisation et au moins une lentille objectif, ces deux lentilles identiques dont les points focaux coïncident étant reliées par une goutte de liquide dans laquelle peut être immergé l'objet à analyser, les barreaux étant munis à leurs autres extrémités d'un transducteur piézoélectrique, ces transducteurs étant aptes à produire des ultrasons focalisés à l'intérieur de l'objet par la lentille de focalisation et à détecter les ultrasons réfléchis ou transmis par l'objet via la lentille objectif, des moyens pour analyser les ultrasons réfléchis ou transmis par l'objet, et des moyens pour déplacer l'objet dans le plan focal des deux lentilles, se caractérise en ce que les lentilles presentent chacune une forme définie par les équations paramétriques:

$$x = N \frac{\left[ D+na- \dfrac{na}{\cos\ r} \right] \cos \left[ \text{Arc sin}(n\ \sin\ r) \right] - D}{\cos \left[ \text{Arc sin }(n\ \sin\ r) \right] - N} \quad et$$

$$y = a\ tg\ r + (D-x)\ tg \left[ \text{Arc.sin}(n\ \sin\ r) \right]$$

dans lesquelles N représente l'indice de réfraction relatif $n_2/n_1$, $n_1$ étant l'indice du matériau constituant les barreaux et $n_2$ l'indice du liquide, n représente l'indice de réfraction relatif $n_3/n_2$, où $n_3$ est l'indice du matériau constituant l'objet, D représente la distance entre le sommet de la lentille et la surface de l'objet, a la distance entre la surface de l'objet et le point focal de la lentille, et r représente le paramètre, x étant pris suivant l'axe optique de la lentille et y suivant l'axe perpendiculaire audit axe optique.

L'emploi d'une lentille asphérique ou plutôt pseudo-hyperbolique, telle que définie ci-dessus, permet d'obtenir un stigmatisme rigoureux au point d'observation de l'objet. Pour la lentille de focalisation, cela veut dire que tous les rayons ultrasonores sortant de cette lentille arrivent en un seul foyer dans l'objet et pour la lentille objectif, cela veut dire que tous les rayons ultrasonores issus de l'objet proviennent d'un même point, ce point étant le point focal de la lentille objectif. Ce stigmatisme est notamment réalisé par élimination des ondes longitudinales dans le plan d'observation de l'objet.

De façon avantageuse, la goutte de liquide est une goutte de mercure ou de gallium. Ces métaux ont l'avantage d'être liquides à température ambiante et de présenter des impédances acoustiques comparables à celles de la plupart des solides, c'est-à-dire des matériaux constituant les objets à analyser. L'emploi de ces matériaux permet d'obtenir des images en profondeur avec une résolution de 2 à 4 fois meilleure que l'emploi de l'eau.

Selon un mode préféré de réalisation du microscope de l'invention, les transducteurs piézoélectriques comprennent une couche d'oxyde de zinc ou de niobate de lithium intercalée entre une électrode en or et une électrode en aluminium, l'électrode en or étant située au contact du barreau correspondant.

D'autres caractéristiques et avantages de l'invention ressortiront mieux de la description qui va suivre, donnée à titre illustratif et non limitatif en référence aux figures annexées, dans lesquelles:

- la figure 1 représente schématiquement un microscope acoustique conformément à l'invention, et
- la figure 2 représente une partie du microscope de la figure 1 au niveau de la lentille de focalisation.

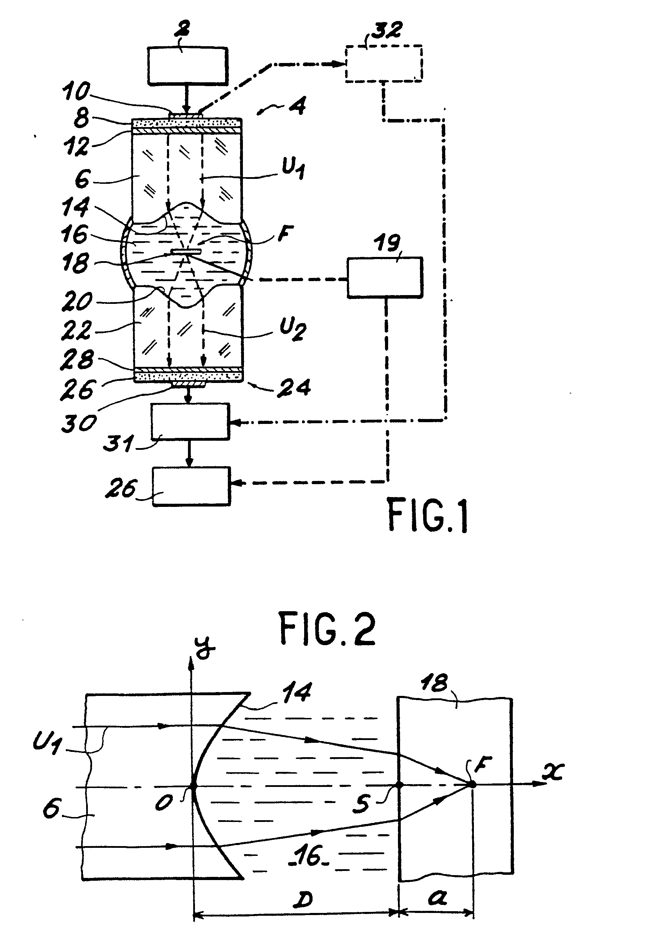

Le microscope acoustique représenté sur la figure 1 comprend un générateur de haute fréquence 2 engendrant des ondes électromagnétiques de fréquence comprise entre 600 et 3000 MHz, servant à exciter un transducteur piézoélectrique 4. Ce transducteur piézoélectrique transforme les ondes électromagnétiques en des ondes ultrasonores sous forme d'un faisceau $F_1$ se propageant à l'intérieur d'un milieu de propagation acoustique 6 en forme de barreau. La fréquence des ondes ultrasonores est la même que celles des ondes électromagnétiques excitatrices.

Le transducteur piézoélectrique 4 peut être constitué d'un film mince 8 d'un matériau piézoélectrique tel que l'oxyde de zinc ou le niobate de lithium intercalé entre deux électrodes 10 et 12. Ce film 8 présente une épaisseur qui est égale à une fraction de la longueur d'onde des ondes acoustiques utilisées. L'électrode 10 réalisée notamment en aluminium, définit les dimensions du faisceau ultrasonore $U_1$. L'électrode 12, notamment en or, est située au contact du milieu de propagation 6.

Le barreau 6 réalisé notamment en saphir ou en silice, comporte à son autre extrémité une lentille acoustique 14 pseudo-hyperbolique définie par une cavité creusée et polie dans le barreau 6 ayant un diamètre variant de 30 microns à quelques millimètres. Cette lentille acoustique 14, située au contact d'un milieu liquide 16, dans lequel la vitesse de propagation des ondes ultrasonores est inférieure à celle dans le milieu acoustique 6, constitue notamment une lentille de focalisation permettant de focaliser en un point F situé à l'intérieur de la goutte de liquide 16, les ondes ultrasonores sortant du barreau 6. Dans la goutte de liquide 16 qui est de préférence une goutte de mercure ou de gallium, est immergé un objet 18, objet que l'on désire observer. Des moyens 19 permettent de déplacer l'objet 18 suivant deux directions perpendiculaires dans le plan focal de la lentille 14, ce plan focal correspondant au plan d'observation de l'objet. Comme moyen de déplacement 19, on peut utiliser tous les systèmes connus, en particulier celui décrit dans le brevet US-4 012 950 du 12 décembre 1974, et d'une façon plus générale, ceux utilisés classiquement dans les microscopes optiques ou électroniques.

Le microscope comprend encore une lentille acoustique 20 pseudo-hyperbolique située au contact de la goutte de liquide 16. Cette lentille acoustique 20 qui est, comme précédemment, définie par une cavité creusée et polie dans un milieu de propagation acoustique 22 en forme de barreau, constitue notamment la lentille objectif du microscope. Cette lentille 20, de préférence identique à la lentille 14, permet de transformer les ondes ultrasonores transmises par l'objet à observer 18 en un faisceau parallèle $U_2$. Ce faisceau d'ondes ultrasonores $U_2$, dont l'intensité et/ou la phase dépendent des caractéristiques élastiques particulières de l'objet 18, est détecté par un transducteur piézoélectrique 24 situé à l'autre extrémité du barreau 22. Ce transducteur 24 permet de fournir un signal électrique, de même fréquence que celle des ondes acoustiques reçues, en direction d'un système de visualisation 26, par exemple du type oscilloscope cathodique, sur lequel peut être visualisée l'image de l'objet.

La visualisation de l'image de l'objet est formée point par point, par déplacement de l'objet la à l'aide des moyens 19 le long d'une ligne puis ligne par ligne. Les signaux électriques issus du transducteur 24 servent à moduler, après acquisition sur une mémoire 31 de type connu, l'intensité du faisceau d'électrons du tube cathodique. Le synchronisme entre le mouvement de l'objet et le balayage du faisceau d'électrons étant assurés par des capteurs de position de type connu. Les grandissements atteints sont d'une dizaine à quelques milliers.

Comme précédemment, le barreau 22 peut être réalisé en saphir ou en silice. De même, le transducteur piézoélectrique 24 peut être constitué d'un film de matériau piézoélectrique 26 notamment en niobate de lithium ou en oxyde de zinc, intercalé entre deux électrodes 28 et 30 réalisées respectivement en or et en aluminium, l'électrode 28 étant située au contact du barreau 22.

Afin d'obtenir une image fidèle de l'objet 18 à observer, le point focal de la lentille acoustique 20 doit être confondu avec celui de la lentille 14.

Le microscope acoustique représenté sur la figure 1 est un microscope fonctionnant en transmission, c'est-à-dire que l'analyse de l'objet 18 se fait à partir des ondes ultrasonores transmises par celui-ci. Cependant, ce microscope qui présente une symétrie par rapport au plan focal des lentilles dans lequel se trouve l'objet 18 peut fonctionner en réflexion, c'est-à-dire que l'analyse de l'objet se fait à partir des ondes ultrasonores réfléchies par ledit objet.

Dans ce cas, la lentille de focalisation 14 joue aussi le rôle de la lentille objectif et le transducteur piézoélectrique 4 joue aussi le rôle de récepteur ou de détecteur. Un système électronique 32 de type classique doit alors être prévu à l'entrée de la mémoire 31 afin de séparer les signaux électriques émis par le transducteur 4 et ceux reçus par celui-ci.

Le fonctionnement en réflexion du microscope peut, bien entendu, être réalisé, de la même façon que précédemment, au moyen de la lentille acoustique 20 et du transducteur piézoélectrique 24.

Afin d'effectuer une analyse à l'intérieur d'un objet 18, tel qu'un circuit intégré ou une cellule vivante, avec une résolution et une définition de l'ordre du micron, les lentilles 14 et 20 présentent une forme asphérique particulière définie par les équations paramétriques suivantes:

$$x = N \frac{\left[D+na-\dfrac{na}{\cos r}\right] \cos \left[\text{Arc } \sin(n \sin r)\right] - D}{\cos \left[\text{Arc } \sin (n \sin r)\right] - N} \text{ et,}$$

$$y = a \text{ tg } r + (D-x) \text{ tg } \left[\text{Arc } \sin (n \sin r)\right]$$

La signification des différents symboles utilisés dans ces deux équations va être donnée en référence à la figure 2 qui représente la partie du microscope de la figure 1 contenant la lentille de focalisation 14, la goutte de liquide 16 et l'objet 18 à observer. Il est bien entendu que cette explication est aussi valable pour la lentille objectif 20.

Dans les équations précédentes, x est pris suivant l'axe optique des lentilles, notamment celui de la lentille 14 (figure 2) et y est pris perpendiculaire à l'axe optique. Dans ces équations, $\underline{r}$ représente le paramètre qui doit être éliminé afin d'obtenir la courbe $y = f(x)$ définissant la forme des lentilles acoustiques. Par ailleurs, D représente la distance entre le sommet O de la lentille 14 et la surface S de l'objet 18 et $\underline{a}$ représente la distance entre la surface S de l'objet et le point focal F de la lentille 14, c'est-a-dire la profondeur de l'objet à laquelle est effectuée l'analyse. Enfin, N représente l'indice de réfraction relatif $n_2/n_1$, $n_1$ étant l'indice du matériau constituant le barreau 6 et $n_2$ l'indice du liquide 16, et n représente l'indice de réfraction relatif $n_3/n_2$ où $n_3$ est l'indice du matériau constituant l'objet 18 dans le plan d'observation ou plan focal de la lentille.

Ces lentilles de profil pseudo-hyperbolique permettent d'obtenir un stigmatisme rigoureux, ce qui permet pour la lentille de focalisation d'obtenir une focalisation parfaite de tous les rayons ultrasonores arrivant sur le plan de l'objet à examiner.

Ces profils sont différents selon la constitution chimique de l'objet à observer, du milieu acoustique 6 ou 22 et du liquide 16 utilisés et selon la profondeur à laquelle on veut réaliser l'observation de l'objet. Ces profils peuvent être déterminés aisément avec n'importe quel calculateur.

Afin d'obtenir un bon pouvoir de résolution, les lentilles pseudo-hyperboliques de l'invention doivent présenter un diamètre aussi faible que possible. En effet, une dimension trop importante des lentilles entraîne une perte d'énergie acoustique relativement élevée par absorption de ladite énergie dans le liquide Cependant, une réduction du diamètre des lentilles, c'est-à-dire de leur ouverture, a pour conséquence une augmentation de la diffraction au niveau de ces lentilles, ce qui modifie le contraste de l'image de l'objet visualisée. Pour remédier à cela, il suffit d'augmenter la fréquence des ondes acoustiques. Ce réglage de la fréquence peut être réalisé coup par coup pour une lentille donnée lors de l'observation même de l'objet.

Des lentilles de focalisation et/ou objectif, pour un microscope acoustique fonctionnant en réflexion, ont été réalisées dans du saphir pour être utilisées avec du mercure et dans le but d'analyser une plaquette de silicium à une profondeur de 0,4 mm. Les lentilles d'un diamètre de 1,50 mm utilisées avec une fréquence des ondes ultrasonores de 2,80 GHz, présentent un pouvoir de résolution de 0,9 μm.

De même, il a été réalisé des lentilles dans du saphir pour être utilisées avec du gallium et dans le but d'analyser une plaquette de silicium à une profondeur de 0,4 mm. Ces lentilles, d'un diamètre de 2,50 mm utilisées avec une fréquence des ondes ultrasonores de 2,20 GHz, présentent un pouvoir de résolution de 1,20 μm.

Par ailleurs, il a été réalisé des lentilles dans du saphir pour être utilisées avec du mercure et dans le but d'analyser une plaquette d'aluminium à différentes profondeurs. Les résultats sont donnés dans le tableau I, ci-après, dans lequel a est la profondeur d'observation, Ø le diamètre des lentilles, f la fréquence des ondes acoustiques et R le pouvoir de résolution.

### TABLEAU I

| $a_{mm}$ | 0,01 | 0,05 | 0,25 | 0,50 | 1 | 5 | 10 |
|---|---|---|---|---|---|---|---|
| $\emptyset_{mm}$ | 0,04 | 0,15 | 0,70 | 1,40 | 2,70 | 13,40 | 26,70 |
| $f_{GHz}$ | 4,10 | 3,10 | 1,80 | 1,40 | 1 | 0,50 | 0,40 |
| $R_{\mu m}$ | 0,40 | 0,50 | 0,80 | 1,10 | 1,50 | 2,90 | 4,10 |

De même, il a été réalisé des lentilles dans du saphir pour être utilisées avec du mercure et dans le but d'analyser une plaquette de cuivre à des profondeurs différentes. Les résultats sont donnés dans le tableau II, ci-après.

### TABLEAU II

| $a_{mm}$ | 0,01 | 0,05 | 0,25 | 0,50 | 1 | 5 | 10 |
|---|---|---|---|---|---|---|---|
| $\emptyset_{mm}$ | 0,09 | 0,36 | 1,70 | 3,40 | 6,70 | 33,90 | 65,70 |
| $f_{GHz}$ | 3 | 1,80 | 0,90 | 0,60 | 0,40 | 0,20 | 0,15 |
| $R_{\mu m}$ | 0,40 | 0,65 | 1,35 | 1,85 | 2,60 | 5,75 | 8,00 |

### Revendications

1. Microscope acoustique permettant d'analyser un objet en profondeur comprenant deux barreaux identiques (6, 22) disposés dans le prolongement l'un de l'autre et comportant à leurs extrémités situées en regard une cavité, ces cavités définissant au moins une lentille de focalisation (14) et au moins une lentille objectif (20) ces deux lentilles identiques dont les points focaux (F) coïncident étant reliées par une goutte de liquide (16) dans laquelle peut être immergé l'objet à analyser (18), les barreaux (6, 22) étant munis à leurs autres extrémités d'un transducteur piézoélectrique (4, 24), ces transducteurs étant aptes à produire des ultrasons ($U_1$) focalisés à l'intérieur de l'objet (18) par la lentille de focalisation (14) et à détecter les ultrasons ($U_2$) réfléchis ou transmis par l'objet via la lentille objectif (20), des moyens pour analyser les ultrasons réfléchis ou transmis par l'objet (28, 31, 32), et des moyens (19) pour déplacer l'objet (18) dans le plan focal des deux lentilles, caractérisé en ce que les lentilles (14, 20) présentent chacune une forme définie par les équations paramétriques:

$$X = N \frac{\left[D+na - \dfrac{na}{\cos r}\right] \cos \left[Arc\ sin\ (n\ sin\ r)\right] - D}{\cos \left[Arc\ sin\ (n\ sin\ r)\right] - N}\ et,$$

$$y = a\ tg\ r + (D-x)\ tg \left[Arc\ sin\ (n\ sin\ r)\right]$$

dans lesquelles N représente l'indice de réfraction relatif $n_2/n_1$, $n_1$ étant l'indice du matériau constituant les barreaux (6, 22) et $n_2$ l'indice du liquide (16), n représente l'indice de réfraction relatif $n_3/n_2$ où $n_3$ est l'indice du matériau constituant l'objet (18), D représente la distance entre le sommet (O) de la lentille et la surface (S) de l'objet, a la distance entre la surface (S) de l'objet et le point focal (F) de la lentille et r représente le paramètre, x étant pris suivant l'axe optique de la lentille et y suivant un axe perpendiculaire audit axe optique.

2. Microscope acoustique selon la revendication 1, caractérisé en ce que les ultrasons présentent une fréquence comprise entre 600 et 3000 MHz.

3. Microscope acoustique selon l'une quelconque des revendications 1 et 2, caractérisé en ce que le liquide (16) est du mercure ou du gallium.

4. Microscope acoustique selon l'une quelconque des revendications 1 à 3, caractérisé en ce que les transducteurs piézoélectriques (4, 24) comprennent une couche (8, 26) d'oxyde de zinc ou de niobate de lithium intercalée entre une électrode (12, 28) en or et une électrode (10, 30) en aluminium, l'électrode en or étant située au contact du barreau correspondant (6, 22).

5. Microscope acoustique selon l'une quelconque des revendications 1 à 4, caractérisé en ce que les barreaux (6, 22) sont réalisés en saphir ou en silice.

**Patentansprüche**

1. Akustisches Mikroskop, das die Untersuchung eines Objekts in der Tiefe erlaubt, enthaltend zwei identische Stäbe (6, 22), die in gegenseitiger Verlängerung angeordnet sind und die an ihren einander zugewandten Enden einen Hohlraum aufweisen, wobei diese Hohlräume wenigstens eine Fokussierlinse (14) und wenigstens eine Objektivlinse (20) definieren, wobei diese zwei identischen Linsen, von denen die Brennpunkte (F) zusammenfallen, durch einen Flüssigkeitstropfen (16) miteinander verbunden sind, in den das zu analysierende Objekt (18) eingebracht werden kann, wobei die Stäbe (6, 22) an ihren anderen Enden mit einem piezoelektrischen Wandler (4, 24) versehen sind, welche Wandler dazu geeignet sind, Ultraschallwellen ($U_1$) zu erzeugen, die in das Innere des Objekts (18) durch die Fokussierlinse (14) fokussiert sind, und Ultraschallwellen ($U_2$) zu detektieren, die von dem Objekt durch die Objektivlinse (20) reflektiert oder übertragen werden, Einrichtungen zum Analysieren der durch das Objekt (28, 31, 32) reflektierten oder übertragenen Schallwellen und Einrichtungen (19), um das Objekt (18) in der Brennebene der zwei Linsen zu verstellen, dadurch gekennzeichnet, daß die Linsen (14, 20) jeweils eine Form aufweisen, die durch die parametrischen Gleichungen:

$$X = N \frac{\left[D+na - \frac{na}{\cos r}\right] \cos \left[Arc \sin (n \sin r)\right] - D}{\cos \left[Arc \sin (n \sin r)\right] - N} \quad und$$

$$y = a \, tg \, r + (D-x) \, tg \left[Arc \sin (n \sin r)\right]$$

definiert ist, in denen N den relativen Brechungsindex $n_2/n_1$ repräsentiert, wobei $n_1$ der Index des Materials ist, das die Stäbe (6, 22) bildet, und $n_2$ der Index der Flüssigkeit (16) ist, n den relativen Brechungsindex $n_3/n_2$ repräsentiert, wobei $n_3$ der Index des das Objekt (18) bildenden Materials ist, D die Distanz zwischen dem Scheitel (O) der Linse und der Oberfläche (S) des Objekts darstellt, a die Distanz zwischen der Oberfläche (S) des Objektes und dem Brennpunkt (F) der Linse ist und r den Parameter darstellt, wobei x in der optischen Achse der Linse liegt und y eine zu der genannten optischen Achse senkechte Achse definiert.

2. Akustisches Mikroskop nach Anspruch 1,
dadurch gekennzeichnet, daß die Ultraschallwellen eine Frequenz zwischen 600 und 3000 MHz haben.

3. Akustisches Mikroskop nach einem der Ansprüche 1 und 2,
dadurch gekennzeichnet, daß die Flüssigkeit (16) Quecksilber oder Gallium ist.

4. Akustisches Mikroskop nach einem der Ansprüche 1 bis 3,
dadurch gekennzeichnet, daß die piezoelektrischen Wandler (4, 24) eine Schicht (8, 26) aus Zinkoxid oder Lithiumniobat enthalten, die zwischen einer Elektrode (12, 28) aus Gold und einer Elektrode (10, 30) aus Aluminium angeordnet ist, wobei die Goldelktrode in Berührung mit dem entsprechenden Stab (6, 22) angeordnet ist.

5. Akustisches Mikroskop nach einem der Ansprüche 1 bis 4,
dadurch gekennzeichnet, daß die Stäbe (6, 22) aus Saphir oder aus Siliciumoxid bestehen.

**Claims**

1. Acoustic Microscope permitting the analysis of an object in comprising two identical bars (6, 22) positioned in an extension of one another and provided at their facing ends with a cavity, said cavities defining at least one focussing lens (14) and at least one obejctive lens (20) said two identical lenses having coinciding foci (F) being linked by a liquid drop (16) in which the object (18) to be analysed can be immersed, the bars (6, 22) being provided at their other ends with a piezoelectric transducer (4, 24), said transducers being able to

produce ultrasonics ($U_1$) focussed within the object (18) by the focussing lens (14) and to detect ultrasonics ($U_2$) reflected or transmitted by the object via the objective lens (20), means for analysing the ultrasonics reflected or transmitted by the object (28, 31, 32) and means (19) for displacing the object (18) in the focal plane of the two leanses, characterized in that the lenses (14, 20) have in each case a shape defined by the parametric equations:

$$x = N \frac{\left[D + na - \dfrac{na}{\cos r}\right] \cos \left[Arc\ \sin(n\ \sin\ r)\right] - D}{\cos \left[Arc\ \sin\ (n\ \sin\ r)\right] - N} \quad \text{and}$$

$$y = a\ tg\ r + (D - x)\ tg\ \left[Arc.\sin(n\ \sin\ r)\right]$$

in which N represents the relative refractive index $n_2/n_1$, $n_1$ being the index of the material forming the bars (6, 22) and $n_2$ the index of the liquid (16), n representing the relative refractive index $n_3/n_2$, in which $n_3$ is the index of the material forming the object (18), D represents the distance between the vertex (O) of the lens and the surface (S) of the object, a the distance between the surface (S) of the object and the focal point (F) of the lens and r the parameter, x being taken along the optical axis of the lens and y along the axis perpendicular to said optical axis.

2. Acoustic microscope according to claim 1 characterized in that the ultrasonics have a frequency beetween 600 and 3000 MHz.

3. Acoustic microscope according to etier of the claims 1 and 2 characterized in that the liquid (16) is mercury or gallium.

4. Acoustic microscope according to any one of the claims 1 to 3 caracterized in that the piezoelectric transducers (4, 24) have a zinc oxide or lithium niobate layer (8, 26) between a gold electrode (12, 28) and an aluminium electrode (10, 30), the gold electrode being in contact with the corresponding bar (6, 22).

5. Acoustic microscope according to any one of the claims 1 to 4 characterized in that the bars (6, 22) are made from sapphire or silica.

7

FIG.1

FIG.2